# FASCICULE DE BREVET EUROPEEN

(11) **EP 1 548 295 B1**
(45) Date de publication et mention de la délivrance du brevet: **04.10.2006**
(21) Numéro de dépôt: 04300886.1
(22) Date de dépôt: 14.12.2004
(51) Int. Cl.: F16B 7/18, F01N 7/18

(54) **Dispositif de fixation d'un plot de suspension déchappement sur un support du bas de caisse d'un véhicule automobile**
Anordnung zur Befestigung eines Abgasanlageaufhängeelements an einem Träger am Unterboden eines Kraftfahrzeugs
Assembly for fastening an exhaust system suspension element to a support of the underbody of a motor vehicle

(30) Priorité: 23.12.2003 FR 0315307
(43) Date de publication de la demande: 29.06.2005
(73) Titulaire: Renault s.a.s., 92100 Boulogne Billancourt (FR)
(72) Inventeur: Pepin, Didier, 78000 Versailles (FR)
(74) Mandataire: Rougemont, Bernard

(56) Documents cités:
- EP-A- 0 479 134
- FR-A- 1 116 468
- GB-A- 1 090 200

## Description

La présente invention concerne un ensemble pour la fixation d'un plot de suspension d'échappement sur un support de bas de caisse d'un véhicule automobile.

La fixation du plot de suspension d'échappement sur son support va maintenant être décrite à titre d'exemple d'un mode de fixation connu de deux pièces d'un véhicule automobile.

La fixation du plot sur son support est classiquement réalisée par serrage au moyen de deux vis. La zone d'appui entre le support et le plot est formée d'un plan perpendiculaire à la direction de serrage. Les deux pièces n'étant retenues l'une à l'autre que par les forces de frottement existant entre les surfaces en contact, la zone d'appui entre les deux pièces doit donc être maximale. Le blocage en rotation des deux pièces est assuré par les deux vis de serrage, toutes deux perpendiculaires à la zone d'appui.

GB-A-1090200 propose un montage de ligne d'échappement pour un véhicule d'automobile comprenant une bride flexible pour absorber l'énergie de vibration entre la ligne d'échappement et la caisse du véhicule.

Le but de la présente invention est de proposer un dispositif de fixation amélioré d'un plot de suspension d'échappement sur un support du bas de caisse d'un véhicule automobile.

Ce but est atteint au moyen d'un dispositif de fixation d'un plot de suspension d'échappement sur un support du bas de caisse d'un véhicule automobile, ledit dispositif de fixation comportant :
- une première pièce et une seconde pièce ;
- des moyens de fixation desdites pièces par serrage selon une direction de serrage ; et
- des moyens permettant d'éviter la rotation desdites pièces autour d'un axe parallèle à ladite direction de serrage.
La présente invention est caractérisée en ce que ladite première pièce est ledit support du bas de caisse pour le plot de suspension, ladite seconde pièce est ledit plot de suspension d'échappement, lesdites pièces viennent en butée l'une sur l'autre pour la formation de zones de blocage, et comportent au moins une zone élastiquement déformable, présentant lesdits moyens permettant d'éviter la rotation desdites pièces sous forme de profils au moins partiellement complémentaires, aptes à coopérer par emboîtement selon ladite direction de serrage , lesdits profils au moins partiellement complémentaires étant emboîtés et déformés de manière élastique lors du serrage pour que lesdites pièces exercent l'une sur l'autre des forces contraires pour augmenter l'action des moyens de fixation.

L'emboîtement des profils permet une meilleure fixation des deux pièces, du fait de la formation de zones de blocage, où les deux pièces viennent en butée l'une sur l'autre. La déformation élastique vient encore renforcer cette fixation, les deux pièces exerçant l'une sur l'autre des forces contraires qui tendent à augmenter l'action des moyens de serrage. A couple de serrage égal, les efforts supportés par le dispositif de l'invention sont supérieurs à ceux supportés par la fixation de l'art antérieur précédemment décrite. Par ailleurs, la fixation étant assurée par butée, elle est beaucoup moins tributaire du coefficient de frottement des zones en contact. Ce coefficient de frottement peut être modifié par des résidus d'huile issus de la fabrication des pièces ou par la détérioration du contact entre les deux pièces du fait de l'endurance.

Le mode de réalisation des moyens permettant d'éviter la rotation n'est pas limité selon l'invention. Selon un mode de réalisation particulier, ces moyens comprennent au moins une région plane disposée sur chacune des pièces, les régions planes coopérant au moins partiellement, par appui lors de la fixation des pièces. La fixation en rotation est ainsi mise en oeuvre par frottement (appui et déformation élastique des régions planes) et par blocage du fait de la coopération par emboîtement des profils.

Selon une variante particulière, chacune des pièces comporte deux régions planes formant un dièdre, les dièdres étant complémentaires l'un de l'autre. Cette forme particulière est simple à réalisée et permet d'obtenir une bonne fixation par butée (blocage). Par cette forme « raide ») permet une plus faible remontée du bruit causé par le véhicule en mouvement dans la caisse. De plus, il est ainsi possible de limiter la surface d'appui entre les deux pièces (seules les régions planes sont au moins partiellement en appui l'une sur l'autre), sans diminuer la force de fixation, ce qui permet de réduire la conduction thermique de l'ensemble formé des pièces assemblées.

Selon une variante particulière, la première pièce comporte deux régions planes formant un angle compris entre 89° et 91°.

Selon une variante, la seconde pièce comporte deux régions planes formant un angle compris entre 87° et 91°.

Selon un second mode de réalisation particulier, le dispositif de l'invention comporte une troisième pièce comprenant au moins une zone élastiquement déformable, apte à être insérée entre la première pièce et la seconde pièce ; cette troisième pièce comporte une première face apte à coopérer au moins partiellement par emboîtement avec le profit de la première pièce et une seconde face apte à coopérer au moins partiellement par emboîtement avec le profil de la seconde pièce.

Les moyens de serrage ne sont pas limités selon l'invention. Il peut s'agir de crochets coopérant avec des anneaux ou de tout autre élément ou combinaison d'éléments permettant le serrage des pièces. Selon un mode de réalisation particulier, les moyens de fixation par serrage comportent une vis de fixation.

Le matériau utilisé pour la réalisation des pièces du dispositif de l'invention n'est pas limitatif de l'invention. Les première, seconde et éventuellement troisième pièces peuvent être, réalisées, par exemple, en tôle d'acier ayant une épaisseur sensiblement comprise entre 1,5 mm et 4 mm. Dans ce cas, les pièces peuvent être formées par emboutissage et elles sont entièrement élastiquement déformables.

La présente invention, ses caractéristiques et les divers avantages qu'elle procure apparaîtront mieux à la lecture de la description qui suit de deux exemples particuliers de réalisation de la présente invention et qui fait référence aux dessins annexés sur lesquels ;
- la figure 1 représente une vue en perspective d'un premier mode de réalisation du dispositif de l'invention ;
- la figure 2 représente un second mode de réalisation du dispositif de l'invention ; et
- la figure 3 représente une vue en coupe selon la direction de serrage du dispositif de la figure 2.

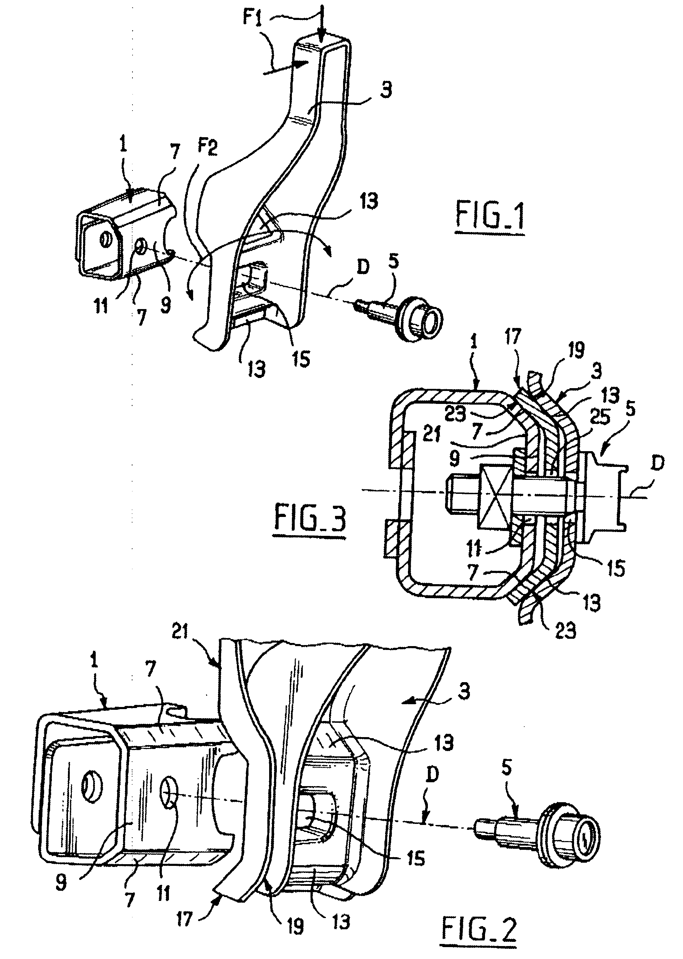

En référence à la figure 1, le dispositif de l'invention comprend une première pièce 1, une seconde pièce 3 et une vis 5.

La première pièce est le support de plot d'échappement, la seconde pièce 3 étant le plot d'échappement.

Le support de plot 1 comporte, dans une zone élastiquement déformable, un profil formé d'un dièdre comportant deux régions planes 7 formant entre elles un angle sensiblement égal à 90°. La partie 9 perpendiculaire à la direction de serrage D, comporte une ouverture 11 munie d'un écrou soudé (non visible sur les figures) disposé sur la face de la partie 9 ne pouvant venir en contact avec le plot d'échappement 3,

Le plot 3 comporte, dans une zone élastiquement déformable, un dièdre complémentaire formé de deux régions planes 13 formant entre elles un angle sensiblement égale à 90°. Un trou 15 est ménagé entre les régions planes 13 en sorte de pouvoir fixer les deux pièces par serrage au moyen de la vis 5 et de l'écrou soudé.

L'assemblage des pièces est le suivant. On emboîte les pièces 1 et 3, les régions planes 7 et 13 viennent en appui l'une sur l'autre. On visse la vis 5 dans l'écrou soudé jusqu'à déformation élastique des profils des pièces 1 et 3. Il est également possible d'emboîter les deux pièces tout en vissant la vis 5.

Lorsque les efforts extérieurs de glissement (représentés par les flèches F1 sur la figure 1) ne sont pas dans l'axe de serrage D, ils créent un couple pouvant faire pivoter les deux pièces autour de l'axe de serrage D (ou direction de serrage) (voir flèche F2 sur la figure 1). Les régions planes 9 et 13 créent alors un couple résistant de même valeur mais de sens opposé. Le blocage en rotation n'est plus assuré par les frottements seuls mais par la présence de zones de butée créant un blocage qui permet d'assurer la fixation en rotation jusqu'à une valeur limite d'effort.

Sur la figure 2 qui représente un second mode de réalisation du dispositif de l'invention, les éléments en commun avec le premier mode de réalisation sont référencés à l'identique. Selon ce second mode de réalisation, le dispositif comprend en outre une troisième pièce 17 qui comporte une première face 19 coopérant avec le profil du plot 3 et une seconde face 21 coopérant avec le dièdre du support de plot 1.

Comme représenté sur la figure 3, les parties 23 qui comportent les régions planes qui coopèrent avec les régions planes 9 et 13 forment un angle sensiblement égal à 90° ; les régions planes 13 du plot forment entre elles un angle sensiblement égal à 88°. Les régions planes 7 forment un angle tel que décrit dans le premier mode de réalisation de l'invention en référence à la figure 1. Une perforation 25 permet le passage de la vis 5 à travers la troisième pièce 17.

L'assemblage des pièces est tel que précédemment décrit.

Sur la figure 3, on remarque la coopération par blocage en butée des différentes pièces. L'utilisation d'une seule vis 5 permet de réduire le nombre de pièces et donc le coût des pièces et de leur montage. La surface d'appui des pièces est réduite par rapport à l'art antérieur puisque seules les régions planes 9, 13 et 23 viennent partiellement en contact. Les parties des différentes pièces perpendiculaires à la direction de serrage D sont distantes les unes des autres. La conduction thermique de l'ensemble est donc limitée.

La même réduction de la surface d'appui des deux pièces en contact est observée dans le cas du dispositif représenté sur la figure 1 et ne comportant pas de troisième pièce 17.

## Revendications

1. Dispositif de fixation d'un plot de suspension d'échappement sur un support du bas de caisse d'un véhicule automobile, ledit dispositif de fixation comportant :
- une première pièce (1) et une seconde pièce (3) ;
- des moyens de fixation (5) desdites pièces par serrage selon une direction de serrage (D) ; et
- des moyens (7 ; 13) permettant d'éviter la rotation desdites pièces autour d'un axe parallèle à ladite direction de serrage (D),
**caractérisé en ce que** ladite première pièce (1) est ledit support du bas de caisse pour le plot de suspension, ladite seconde pièce (3) est ledit plot de suspension d'échappement, lesdites pièces viennent en butée l'une sur l'autre pour la formation de zones de blocage, et comportent au moins une zone élastiquement déformable, présentant lesdits moyens (7 ; 13) permettant d'éviter la rotation desdites pièces sous forme de profils au moins partiellement complémentaires, aptes à coopérer par emboîtement selon ladite direction de serrage (D), lesdits profils au moins partiellement complémentaires étant emboîtés et déformés de manière élastique lors du serrage pour que lesdites pièces exercent l'une sur l'autre des forces contraires pour augmenter l'action des moyens de fixation (5).

2. Dispositif de fixation selon la revendication 1, **caractérisé en ce que** lesdits moyens permettant d'éviter la rotation desdites pièces selon un axe parallèle à ladite direction de serrage comprennent au moins une région plane (7 ; 13) disposée sur chacune desdites pièces, lesdites régions planes (7 ; 13) coopérant au moins partiellement par appui lors de la fixation desdites pièces.

3. Dispositif de fixation selon la revendication 2, **caractérisé en ce que** chacune desdites pièces comportent deux régions planes (7 ; 13) formant un dièdre, lesdits dièdres étant complémentaires l'un de l'autre

4. Dispositif de fixation selon la revendication 3, **caractérisé en ce que** ladite première pièce (1) comporte deux régions planes (7) formant un angle compris entre 89° et 91°.

5. Dispositif de fixation selon la revendication 3 ou 4, **caractérisé en ce que** ladite seconde pièce comporte deux régions planes (13) formant un angle compris entre 87° et 91°.

6. Dispositif de fixation selon l'une quelconque des revendications 1 à 5, **caractérisé en ce qu'**il comporte une troisième pièce (17) comprenant au moins une zone élastiquement déformable, apte à être insérée entre ladite première pièce et ladite seconde pièce, ladite troisième pièce (17) comportant une première face (21) apte à coopérer au moins partiellement par emboîtement avec le profil de ladite première pièce (1) et une seconde face (23) apte à coopérer au moins partiellement par emboîtement avec le profil de ladite seconde pièce (3).

7. Ensemble selon l'une quelconque des revendications 1 à 6, **caractérisé en ce que** lesdits moyens de fixation par serrage comportent une vis de fixation (5).

8. Dispositif de fixation selon l'une quelconque des revendications 1 à 7, **caractérisé en ce que** lesdites première, seconde et éventuellement troisième pièces (1; 3; 17) sont réalisées en tôle d'acier ayant une épaisseur sensiblement comprise entre 1,5 mm et 4 mm.

## Claims

1. Assembly for fastening an exhaust system suspension element to a support of the underbody of a motor vehicle, the said fastening assembly comprising:
- a first part (1) and a second part (3);
- means for fastening (5) the said parts by tightening according to a direction of tightening (D); and
- means (7; 13) for preventing the rotation of the said parts about an axis parallel to the said direction of tightening (D), **characterized in that** the said first part (1) is the said support of the underbody for the suspension element, the said second part (3) is the said exhaust suspension element, the said parts abut against each other to form interlocking areas, and comprise at least one elastically deformable area, having the said means (7; 13) for preventing the rotation of the said parts in the form of at least partly complementary metal sections, that can cooperate by nesting according to the said direction of tightening (D), the said at least partly complementary metal sections being nested and elastically deformed during tightening so that the said parts exert reciprocal pressure on each other to enhance the action of the means of fastening (5).

2. Fastening assembly according to Claim 1, **characterized in that** the said means for preventing the rotation of the said parts about an axis parallel to the said direction of tightening comprise at least one flat area (7; 13) arranged on each of the said parts, the said flat areas (7; 13) cooperating at least partly by bearing during the fastening of the said parts.

3. Fastening assembly according to Claim 2, **characterized in that** each of the said parts includes two flat areas (7; 13) forming bevelled corners, the said bevelled corners complementing each other.

4. Fastening assembly according to Claim 3, **characterized in that** the said first part (1) comprises two flat areas (7) making an angle which is between 89° and 91°.

5. Fastening assembly according to Claim 3 or 4, **characterized in that** the said second part includes two flat areas (13) making an angle which is between 87° and 91°.

6. Fastening assembly according to any one of Claims 1 to 5, **characterized in that** it includes a third part (17) comprising at least one elastically deformable area that can be inserted between the said first part and the said second part, the said third part (17) including a first face (21) that can cooperate at least partly by nesting with the metal section of the said first part (1) and a second face (23) that can cooperate at least partly by nesting with the metal section of the said second part (3).

7. Assembly according to any one of the preceding Claims 1 to 6, **characterized in that** the said means of fastening by tightening comprise a mounting bolt (5).

8. Fastening assembly according to any one of Claims 1 to 7, **characterized in that** the said first, second and possibly third parts (1; 3; 17) are made of steel sheet generally having a thickness of between 1.5 mm and 4 mm.

## Patentansprüche

1. Befestigungsvorrichtung eines Abgasanlageaufhängeelements an einem Träger am Unterboden eines Kraftfahrzeugs, wobei die Befestigungsvorrichtung umfasst:
- ein erstes Stück (1) und ein zweites Stück (3);
- Mittel (5) zur Befestigung der Stücke durch Festklemmen in eine Festklemmrichtung (D); und
- Mittel (7; 13), die es ermöglichen, die Drehung der Stücke um eine Achse parallel zur Festklemmrichtung (D) zu vermeiden,
**dadurch gekennzeichnet, dass** das erste Stück (1) der Träger des Unterbodens für das Aufhängeelement ist, dass das zweite Stück (3) das Abgasanlageaufhängeelement ist, wobei die Stücke aneinander anschlagen, um Feststellzonen zu bilden, und mindestens eine elastisch verformbare Zone umfassen, die die Mittel (7; 13), die es ermöglichen, die Drehung der Stücke zu verhindern, in Form von zumindest teilweise komplementären Profilen aufweist, die durch Einstecken in die Festklemmrichtung (D) zusammenwirken können, wobei die zumindest teilweise komplementären Profile elastisch beim Festklemmen eingesteckt und verformt werden, so dass die Stücke aufeinander entgegengesetzte Kräfte ausüben, um die Wirkung der Befestigungsmittel (5) zu erhöhen.

2. Befestigungsvorrichtung nach Anspruch 1, **dadurch gekennzeichnet, dass** die Mittel, die es ermöglichen, die Drehung der Stücke entlang einer Achse parallel zur Festklemmrichtung zu vermeiden, mindestens einen flachen Bereich (7; 13) umfassen, der auf jedem der Stücke angeordnet ist, wobei die flachen Bereiche (7; 13) zumindest teilweise durch Abstützen bei der Befestigung der Stücke zusammenwirken.

3. Befestigungsvorrichtung nach Anspruch 2, **dadurch gekennzeichnet, dass** jedes der Stücke zwei flache Bereiche (7; 13) umfasst, die ein Dieder bilden, wobei die Dieder zueinander komplementär sind.

4. Befestigungsvorrichtung nach Anspruch 3, **dadurch gekennzeichnet, dass** das erste Stück (1) zwei flache Bereiche (7) aufweist, die einen Winkel zwischen 89° und 91° bilden.

5. Befestigungsvorrichtung nach Anspruch 3 oder 4, **dadurch gekennzeichnet, dass** das zweite Stück zwei flache Bereiche (13) aufweist, die einen Winkel zwischen 87° und 91° bilden.

6. Befestigungsvorrichtung nach einem der Ansprüche 1 bis 5, **dadurch gekennzeichnet, dass** sie ein drittes Stück (17) aufweist, umfassend mindestens eine elastisch verformbare Zone, die zwischen dem ersten Stück und dem zweiten Stück eingesetzt werden kann, wobei das dritte Stück (17) eine erste Seite (21), die zumindest teilweise durch Einstecken mit dem Profil des ersten Stücks (1) zusammenwirken kann, und eine zweite Seite (23) umfasst, die zumindest teilweise durch Einstecken mit dem Profil des zweiten Stücks (3) zusammenwirken kann.

7. Einheit nach einem der Ansprüche 1 bis 6, **dadurch gekennzeichnet, dass** die Mittel zur Befestigung durch Festklemmen eine Befestigungsschraube (5) umfassen.

8. Befestigungsvorrichtung nach einem der Ansprüche 1 bis 7, **dadurch gekennzeichnet, dass** das erste, zweite und eventuell dritte Stück (1; 3; 17) aus Stahlblech mit einer Dicke im Wesentlichen zwischen 1,5 mm und 4 mm hergestellt sind.
